# EUROPÄISCHE PATENTSCHRIFT

(11) **EP 2 730 161 B1**
(45) Veröffentlichungstag und Bekanntmachung des Hinweises auf die Patenterteilung: **18.09.2019**
(21) Anmeldenummer: 13192526.5
(22) Anmeldetag: 12.11.2013
(51) Int. Cl.: A01K 1/00

(54) **Stalleinrichtung, und Abluftreinigungseinrichtung für selbige**
Live stock barn and exhaust air cleaning device for such a barn
Bâtiment d'élevage et dispositif de traitement des effluents gazeux

(30) Priorität: 12.11.2012 DE 202012010730 U
(43) Veröffentlichungstag der Anmeldung: 14.05.2014
(73) Patentinhaber: Big Dutchman International GmbH, 49377 Vechta-Calveslage (DE)
(72) Erfinder: Bullermann, Siegbert, 26169 Markhausen (DE); Dr. Haneke, Jörgen, 49661 Cloppenburg (DE)
(74) Vertreter: Eisenführ Speiser

(56) Entgegenhaltungen:
- WO-A1-2004/011127
- CH-A- 348 126
- DE-A1- 10 152 923
- DE-A1- 10 161 654
- DE-U1-202010 000 009
- DE-U1-202011 000 946

## Beschreibung

Die vorliegende Erfindung betrifft eine Stalleinrichtung für Nutztiere, mit einem Raum, in dem sich Tiere, die in dem Stall gehalten werden, aufhalten sowie einer Entlüftung, mittels der Luft aus dem Stallraum abgeführt wird, sowie einer Abluftreinigungseinrichtung, mittels der Stoffe, zum Beispiel Gase und Stäube, die sich in der Abluft befinden, herausgefiltert werden, mit wenigstens einem ersten, mit einer Waschflüssigkeit aus einem Waschflüssigkeitskreislauf beaufschlagbaren Filterelement.

Stalleinrichtungen sind schon lange bekannt, insbesondere solche für Nutztiere. Dabei unterscheiden sich die Nutztierställe im Wesentlichen immer auch durch ihren Aufbau, je nachdem, welche Nutztiere dort gehalten werden. Nach der Haltung der Nutztiere, auch nach der Anzahl der Nutztiere im Stall, aber auch je nach Art der Nutztiere unterscheiden sich ganz erheblich die Emissionen eines solchen Stalles.

Diese Emissionsbelastungen nehmen deutlich zu, je intensiver die Nutztierhaltung ist desto mehr Nutztierställe existieren insgesamt. Mit dem steigenden Bedarf der Bevölkerung nach proteinreicher Kost, insbesondere Fleisch, steigen aber auch automatisch die Zahlen solcher Stalleinrichtungen an und damit insgesamt auch die Belastung der Umwelt mit den Emissionen, die durch eine solche Stalleinrichtung beim Betrieb, also bei der Tierproduktion, generiert werden.

Zur Verringerung dieser Emissionen ist es auch bereits bekannt, Abluftreinigungseinrichtungen auszubilden, mittels denen die Abluft der Stalleinrichtung gefiltert wird, um somit in der Abluft befindliche Emissionen, zum Beispiel Staub, Ammoniak, Geruchsstoffe etc. zu reduzieren.

Solche Abluftreinigungseinrichtungen sind aber vergleichsweise teuer und das gilt auch für ihren Betrieb, denn wenn die Abluft aus dem Stallinnenraum abgesaugt wird, bedarf es hierzu elektrischer Energie für Ventilatoren etc. und wenn mittels dieser Ventilatoren die Abluft in die Abluftreinigungseinrichtungen gedrückt wird, ist ein relativ hoher elektrischer Energiebedarf notwendig.

Aus WO 2004/011127 A1 ist ein Verfahren und eine Vorrichtung zum Reinigen von Ammoniak enthaltender Luft, beispielsweise aus einem Stall ausströmender Luft durch Waschen mit einer säurehaltigen Waschflüssigkeit bekannt. Zu diesem Zweck ist eine Luftreinigungseinheit vorgesehen, welche ein Gehäuse aufweist, das über Öffnungen mit dem Stallraum für die Tiere verbunden ist. Das Gehäuse ist über Waschflüssigkeitsleitungen mit einer zentralen Waschflüssigkeitssteuereinheit gekoppelt.

CH-A-348 126 zeigt eine Wasserreinigungsmaschine mit einem umlaufenden Bandsieb.

Aufgabe der Erfindung ist es, den Betrieb einer Stalleinrichtung zu optimieren und insbesondere auch günstiger zu gestalten, d.h. insbesondere mit insgesamt weniger Energieaufwand.

Die Erfindung löst die ihr zugrundeliegende Aufgabe mittels einer Stalleinrichtung nach Anspruch 1.

Vorteilhafte Weiterbildungen sind in den Unteransprüchen sowie den nachfolgenden Erläuterungen angegeben.

Insbesondere löst die Erfindung die Aufgabe bei einer Stalleinrichtung der eingangs genannten Art, indem die Abluftreinigungseinrichtung mindestens einen ersten Raum sowie einen von dem ersten Raum getrennten zweiten Raum aufweist, wobei das erste Filterelement in dem ersten Raum angeordnet ist, sich eine Waschflüssigkeitsleitung von dem ersten Filterelement in den zweiten hinein Raum erstreckt, fluiddicht gegen den zweiten Raum verschlossen ist, und in einen fluiddicht gegen den zweiten Raum verschließbaren Waschflüssigkeitsbehälter mündet, dem eine Pumpe zum Umfördern der Waschflüssigkeit in dem Waschflüssigkeitskreislauf zugeordnet ist, im Waschflüssigkeitskreislauf stromabwärts von dem ersten Filterelement, vorzugsweise ferner stromabwärts von dem einem oder den mehreren Bodenabläufen, und stromaufwärts des Waschflüssigkeitsbehälters ein Bandsieb angeordnet ist, welches zum Abscheiden von Grobstoffen, beispielsweise Federn, aus der Waschflüssigkeit eingerichtet ist, wobei vorzugsweise das Bandsieb als Förderband ausgebildet ist, und dazu eingerichtet ist, im Anlagenbetrieb angetrieben zu werden, wobei die Stalleinrichtung ein zweites Filterelement aufweist, welches zu dem ersten Filterelement beabstandet in dem ersten Raum angeordnet ist und mittels einer Frischwasserzufuhr befeuchtbar ist, um eine Austrocknung des zweiten Filterelements zu verhindern.

Ein wesentlicher Vorteil der Erfindung wird darin gesehen, dass aufgrund der Trennung der Abluftreinigungseinrichtung in zwei separate Räume, von denen der erste Raum die Filtermittel aufweist und in dem ersten Raum die Waschflüssigkeit offen vorhanden ist, und der zweite Raum fluiddicht gegen den ersten Raum verschließbar ist, es ermöglicht wird, in dem zweiten Raum all jene Komponenten anzuordnen, die für den Anlagenbetrieb wichtig sind, und nach Möglichkeit nicht in Kontakt mit der Waschflüssigkeit kommen sollten. Vorzugsweise ist der Waschflüssigkeitsbehälter mittels eines Deckels verschließbar. Hierdurch ist ein Schutz gegen Hineinfallen gewährleistet, und es lässt sich ferner beispielsweise Pumpentechnik auf dem Deckel montieren. Weiter vorzugsweise ist der zweite Raum, wenn er als Technikraum eingerichtet ist, mit Überdruck relativ zu dem ersten Raum beaufschlagbar. Dadurch, dass der zweite Raum dann im Überdruck "gefahren werden kann", wird erreicht, dass gegebenenfalls aus dem Behälter austretende Gase (z.B. Ammoniak) im zweiten Raum keinen Schaden an technischen Komponenten anrichten. Besonders bevorzugt sind Luftleitmittel zwischen dem ersten Raum und dem zweiten Raum ausgebildet, die einen Gasstrom in Richtung des ersten Raumes ermöglichen, damit etwaige N-Verbindungen nicht am Filter vorbei entweichen können und letztendlich doch die Umwelt schädigen (beispielsweise Stickstoffhaltige- Gase oder NOₓ-Gase).

Alternativ oder zusätzlich der Raum, oder Teile davon, vorzugsweise über eine Rohrverbindung an den zentralen Abluftkanal des Stalls oder an die Ansaugseite der Ventilatoren im Stall derart angeschlossen, dass mittels Unterdruck die Abluft aus dem Raum, oder Teilen daraus, abgesaugt wird.

Die Waschflüssigkeit ist in der Regel nicht pH-neutral, sondern sauer, damit Ammoniak gelöst werden kann. Ist, beispielsweise bei Schlachthöfen oder Biogasanlagen, in der zu filternden Luft allerdings Schwefelwasserstoff vorhanden, wird vorzugsweise Lauge zu der Waschflüssigkeit hinzugefügt. Zudem ist die Luft in dem ersten Raum - bedingt durch die zu reinigende Abluft - ammoniakhaltig (oder bei obigen Anlagen schwefelwasserstoffhaltig) und feucht. Hierdurch wird erheblicher Verschleiß und eine erhebliche Korrosion an nicht säurebeständigen Armaturen, elektrischen/elektronischen Bauteilen etc. provoziert. All jene Komponenten, die der Anlagentechnik zuzuordnen sind, können in dem zweiten Raum angeordnet werden.

In einer vorteilhaften Weiterbildung ist der Waschflüssigkeitsbehälter ein Rundbehälter mit einem zylindrischen Wandabschnitt, und die Waschflüssigkeitsleitung weist einen behälterseitigen Einlauf auf, welcher in einem Winkel von größer als 0° zu einer Radiallinie des zylindrischen Abschnitts ausgerichtet ist. Vorzugsweise läuft hierdurch die Waschflüssigkeit derart "schräg" in den Rundbehälter ein, dass die eingelaufene Waschflüssigkeit eine kreiselnde, vorzugsweise strudelförmige Strömungsbewegung ausführt. Neben einer begünstigten Schlammabscheidung dient die Kreisbewegung der Waschflüssigkeit im Rundbehälter auch einer besseren Säure/Lauge-Vermischung oder auch einem besseren Mischverhalten von in Feststoffform eingegebenen Chemikalien.

Vorzugsweise ist in einem Bodenbereich des Waschflüssigkeitsbehälters eine Abschlämmpumpe angeordnet, welche dazu eingerichtet ist, sich ablagernden Schlamm aus dem Waschflüssigkeitsbehälter abzusaugen.

Die Abschlämmpumpe ist ferner bevorzugt dazu eingerichtet, den Schlamm als Funktion eines vorbestimmten, in dem Waschflüssigkeitsbehälter gemessenen Leitwertes abzupumpen.

Der Rundbehälter ist in einer bevorzugten Ausführungsform in Richtung seines Bodenbereiches konisch verjüngt ausgebildet. Dieser "Schlammkeil" dient der verbesserten Schlammabscheidung.

Vor bzw. unterhalb des ersten Filterelements der Abluftreinigungseinrichtung ist vorzugsweise eine Ablaufrinne angeordnet, welche mittels einem oder mehreren Bodenabläufen und/oder Seitenabläufen fluidleitend mit der Waschflüssigkeitsleitung verbunden ist.

Eine automatische Reinigungsvorrichtung (Abschaber, Bedüsung) ist vorzugsweise vorgesehen und zur Reinigung des Bandsiebes eingerichtet. Vorzugsweise erfolgt die Reinigung des Bandsiebes hierbei intervallgesteuert.

Gemäß einer weiteren Ausführungsform der Erfindung verfügt die Stalleinrichtung über eine Überwachungseinrichtung, mittels der die Belastung der Abluft überwacht wird. Unter der Belastung wird hierbei zum Beispiel die Staubbelastung, Ammoniakbelastung, oder Geruchsbelastung verstanden.

Die Stalleinrichtung weist vorzugsweise eine Steuereinrichtung auf, weiche bei Überschreiten eines vorbestimmten Belastungswerts in der Abluft aktiviert wird.

Die Abluftreinigungseinrichtung ist bevorzugt mit der Steuereinrichtung gekoppelt, und die Filtereinrichtung ist derart steuerbar, dass sie in einem ersten Zustand von der Abluft durchströmt wird und in wenigstens einem weiteren Zustand von der Abluft nicht durchströmt wird.

Die Steuereinrichtung aktiviert die Abluftreinigungseinrichtung vorzugsweise dann, wenn in der Abluft ein vorbestimmter Belastungswert quantitativ einen vorbestimmten Wert überschreitet, derart, dass die Abluft die Abluftreinigungseinrichtung durchströmt und somit die Belastung in Form von Emissionen in der Abluft am Ausgang der Abluftreinigungseinrichtung geringer ist als am Eingang der Abluftreinigungseinrichtung.

Weiter vorzugsweise weist die Stalleinrichtung eine Aufzeichnungseinheit auf, welche mit der Überwachungseinheit gekoppelt ist und mittels welcher die Belastung der Abluft aufgezeichnet wird.

Die Überwachungseinrichtung ist vorzugsweise fernbetreibbar. Insbesondere ist bevorzugt, dass sie nur von Fachpersonal beziehungsweise autorisiertem Personal betreibbar ist, insbesondere derart, dass der Schwellwert für bestimmte Emissionsbelastungen durch einen anderen Bediener einstellbar ist als durch den vom Stallbetreiber selbst, und dass besonders bevorzugt der Zugriff auf die Überwachungseinrichtung für den Stallbetreiber vor Ort gesperrt ist.

Die Messeinrichtung ist vorzugsweise passwortgeschützt, und es sind nur nach Eingabe eines Passwortes vorbestimmte, vorzugsweise mit der Messeinrichtung messbare, Schwellwerte einstellbar.

Die Betriebszeit der Abluftreinigungseinrichtung ist in einer bevorzugten Weiterbildung ermittelbar und kann aufgezeichnet werden. Die Betriebszeit ist hierbei diejenige Zeit, in der die Filtereinrichtung von Abluft durchströmt wird.

Vorzugsweise weist die Stalleinheit ferner eine Datenausgabe-Einheit für die gemessenen Daten auf.

In einer besonders bevorzugten Stalleinrichtung gemäß der Erfindung sind eine, mehrere oder sämtliche der Folgenden in dem zweiten Raum angeordnet:
- Überwachungseinrichtung,
- Steuereinrichtung,
- Aufzeichnungseinheit,
- Messeinrichtung,
- Datenausgabe-Einheit.

Bei der erfindungsgemäßen Stalleinrichtung ist die Abluftreinigungseinrichtung nicht ständig in Betrieb, sondern kann zugeschaltet werden. Die Zuschaltung erfolgt dabei abhängig von den Emissionswerten oder dem Stallklima (Temperatur, Luftfeuchte, Druck), die in der Abluft gemessen werden.

Wird beispielsweise die Staubbelastung beziehungsweise die Staubmenge in der Abluft überwacht und überschreitet diese Staubmenge, also damit die Staubbelastung und die damit einhergehenden Emissionen einen vorbestimmten qualitativen Wert, wird mittels einer Steuereinrichtung die Abluftreinigungseinrichtung aktiviert und erst dann die Abluft durch den Filter gereinigt.

Solange also die Emissionsbelastung in der Abluft einen bestimmten Wert unterschreitet, muss die Luft nicht gefiltert werden und somit können mittels der Erfindung die Filterbetriebslaufzeiten verlängert werden, ohne dass es zu unangenehmer Geruchs- und Emissionsbelastung in der Umwelt kommt.

Vorzugsweise wird mittels eines Luft-Luft-Wärmetauschers bei gering belasteter Abluft - d.h. wenn die Emissionsbelastung in der Abluft einen vorbestimmen Wert unterschreitet - der Abluft Wärme entzogen, an die kalte Zuluft übertragen und an die Umgebung abgegeben werden, beispielsweise über einen Dachfirst der erfindungsgemäßen Stalleinrichtung.

Gleichzeitig sinkt dadurch auch der elektrische Energiebedarf für die Stalleinrichtung, denn, wenn die Abluft nicht durch einen Filter gedrückt werden muss, sondern direkt in die Atmosphäre außerhalb des Stalls gedrückt wird, ist dafür weniger Energie notwendig als wenn die Abluft durch den Filter gedrückt werden muss.

Durch die erfindungsgemäße Stalleinrichtung steigt die Emissionsbelastung, insbesondere die Gas- oder Partikelbelastung nicht erheblich an. Eine Geruchsbelastung beispielsweise wird erst dann wahrgenommen, wenn sich in der Abluft eine bestimmte Konzentration an Gasen oder Partikeln befinden und damit ist durch die erfindungsgemäße Stalleinrichtung keine negative Beeinflussung der Umwelt, wie beispielsweise durch Gerüche, möglich.

Schließlich schlägt die Erfindung auch vor, die gesamte Emissionsbelastung in der Abluft zu überwachen, zum Beispiel durch Messung bestimmter Emissionswerte, z. B. Staub, Ammoniak etc.

Diese gemessenen Werte werden darüber hinaus über die Zeit aufgezeichnet, so dass später eine Beurteilung präzise sowohl über die jeweils zu einem bestimmten Zeitpunkt aktuell gegebene Emissionsbelastung als auch über die insgesamt während eines bestimmten Zeitraums aufaddierte Emissionsmenge bestimmt werden kann.

Somit kann eine sehr präzise Aussage insgesamt für den gesamten Stall getroffen werden und somit kann auch ein Stall derart betrieben werden, dass innerhalb eines bestimmten Zeitraums eine bestimmte Emissionsmenge nicht überschritten wird.

Schließlich kann auch der Betreiber des Nutztierstalls aus den gemessenen und aufgezeichneten Daten Schlussfolgerungen ziehen, die ihn dazu veranlassen, unmittelbar in den Betrieb eines Stalls einzugreifen, sei es durch entsprechende Änderung der Fütterung oder auch der Tierhaltebedingungen, zum Beispiel Frischluftzufuhr, Temperatureinstellung, Feuchtigkeitszufuhr, Wasser etc.

Mithin wird durch die Erfindung ermöglicht werden, einen Stall emissionsoptimiert zu fahren, also nicht nur Wert darauf zu legen, dass die Tiere selbst optimal versorgt werden, sondern, dass dabei gleichzeitig auch die Belastung der Umwelt mit Emissionen minimal gehalten wird, wenigstens gegenüber bisherigen Ställen deutlich verringert wird.

Wenn die gemessenen oder aufgezeichneten Daten/Unterlagen über den Betrieb des Stalls nicht nur dem Stallbetreiber oder mit ihm vertraglich verbundene Erzeugergemeinschaften zugänglich gemacht werden, sondern eventuell auch den Überwachungsbehörden (z.B. Gewerbeaufsichtsämtern), kann zu einem späteren Zeitpunkt sehr genau nachvollzogen werden, welche Emissionsbelastung insgesamt von dem Stall ausging.

Wie erwähnt hat die Aufzeichnung und die Darstellung der aktuellen Emissionsbelastung, aber auch der aufgezeichneten Emissionsmengen für den Stallbetreiber den Vorteil, dass er besser als bisher exakt den Zusammenhang zwischen seiner Nutztierhaltung/Fütterung/Belüftung etc. und der damit einhergehenden Staub-/Ammoniakerzeugung - nachfolgend allgemein als Emissionsbelastung bezeichnet - erkennen kann.

Wird beispielsweise zu viel Ammoniak und/oder zu viel Staub erzeugt - was sich geruchsmäßig sofort und sehr negativ bemerkbar macht - so kann der Stallbetreiber dem entgegenwirken, indem er beispielsweise mehr oder weniger Feuchtigkeit in den Stall hineinbringt oder auch andere Parameter, zum Beispiel Temperatur, Frischbelüftung etc. der Tierhaltung verändert.

Die Erfindung dient also nicht nur dazu, die Geruchsbelastung und damit die Emissionsbelastung der gesamten Stalleinrichtung auf ein Mindestmaß zu reduzieren, beziehungsweise auf ein höchst erlaubtes Maß zu limitieren und dies auch überprüfbar zu machen. Die Zuschaltung und damit die Aktivierung der Abluftreinigungseinrichtung, so dass die Abluft die Abluftreinigungseinrichtung durchströmt, kann auch abhängig gemacht werden von der Windrichtung, wenn beispielsweise bei einer bestimmten Windrichtung, zum Beispiel bei Westwind, eine Geruchsbelästigung in eine Richtung gegeben ist - so dass Anwohner, die im Osten wohnen davon betroffen wären - und somit unerlaubt ist, so wird die Abluftreinigungseinrichtung zugeschaltet, der hingegen beim gleichen Stall bei Ostwind, dann also, wenn der Wind die Gerüche, Stäube/Ammoniak etc. in eine andere Richtung treibt, die Abluftreinigungseinrichtung nicht zugeschaltet wird, weil dies nicht mehr notwendig ist. Somit erhöht die Erfindung auch insgesamt die Verträglichkeit der Stalleinrichtung mit ihrer Außenumgebung.

Bei einem Einsatz von Biofiltern in der Abluftreinigungsanlage wird vorzugsweise mittels Befeuchtungsmitteln ein Mindestmaß an Befeuchtung des organischen Materials permanent gewährleistet.

Mithin kann auch der Stall so betrieben werden, dass nur eine bestimmte Emissionsmenge in einer vorbestimmten Zeit erlaubt ist. Damit sind auch technische Kriterien vorgebbar, welche bislang nicht gemessen werden und schon gar nicht für die Optimierung des Stallbetriebes in Betracht gezogen werden können.

Mithin ermöglicht die Erfindung einen Stall nach Art eines Emissionszertifikats (Emission = Staub, Ammoniak, Gerüche etc.) zu betreiben beziehungsweise einem Stall ein bestimmtes Emissionszertifikat zuzubilligen und somit dem Betreiber des Stalls einen Betrieb des Stalls aufzuzwingen, bei dem die Emissionsmengen einerseits, also auch die aktuellen Emissionsbelastungen andererseits, niemals ein Höchstmaß überschreiten.

Die Folge der ständigen Messung und Aufzeichnung und der Dokumentation aller wesentlichen Emissionsereignisse wird letztlich sein, dass der Stallbetreiber versuchen wird, den Stall so optimal zu betreiben, dass er den Stall über das gesamte Jahr hinweg optimal fährt, also mit einem möglichst hohem Output an Tierproduktion einerseits, andererseits auch mit einem minimalen Output an Emissionen, jedenfalls mit einem Emissionsmassenstrom, der noch im Rahmen des Erlaubten und von den Behörden Genehmigten liegt.

Wenn diese Werte verändert werden sollten, so ist dies durch eine Umprogrammierung der Mess-/Überwachungseinrichtung möglich, wobei diese Umprogrammierung eine entsprechende Autorisierung durch ein Fachpersonal erlaubt, so dass nicht Jedermann, zum Beispiel der Stallbetreiber, auf die ihm gewünschte Weise die Werte, die in der Überwachungs-/Dokumentationseinrichtung vorgegeben werden, selbst wählen kann.

Wenn die gemessenen Werte an eine Überwachungseinheit geschickt werden, die zum Beispiel bei der Behörde angesiedelt sind, so ist auch der behördliche Eingriff jederzeit möglich, wenn ein Überschreiten der gemessenen Werte, zum Beispiel der aktuellen Staubbelastungswerte gemessen wird.

Durch die erfindungsgemäße Stalleinrichtung erhöht sich insgesamt auch die Qualität der Tierproduktion, weil den Kunden, die also die Tiere abnehmen, nunmehr eine präzise Information darüber mitgeteilt werden kann, welche Emissionsbelastung mit der Produktion dieser Tiere verbunden war.

Die gesamten Mess-, Überwachungs- und Dokumentationseinrichtungen sollten weitestgehend "verplombt" sein, um eine Verfälschung oder einen Eingriff in die Messeinrichtungen zu vermeiden, insbesondere auch solche, die der Stallbetreiber vielleicht selbst gerne vornehmen würde. Dies kann zum Beispiel durch eine übliche Einrichtung wie z.B. passwortgeschützte Programme, separate Schlüsseleinrichtung etc. ermöglicht werden.

Gemäß einer bevorzugten Ausführungsform der Erfindung ist der Waschflüssigkeitsbehälter als Erdbehälter ausgebildet, der insbesondere im Bodenreich oder einem Fundament im Bodenreich eingelassen ist. Gemäß einer ebenso bevorzugten Alternative ist der Waschflüssigkeitsbehälter als Aufstellbehälter ausgebildet, und insbesondere zum Aufstellen auf einer Oberfläche eingerichtet. Vorzugsweise ist der Aufstellbehälter als Kunststoffbehälter ausgeführt. Besonders bevorzugt ist der Aufstellbehälter als Silo ausgebildet. Je nach baulichen Voraussetzungen ist mit den beiden Alternativen jeweils eine vorteilhafte Einbau- und Nachrüstmöglichkeit bereitgestellt.

Die Erfindung betrifft ferner eine Abluftreinigungseinrichtung zur Verwendung in einer Stalleinrichtung für Nutztiere, insbesondere nach einer vorstehend beschriebenen bevorzugten Ausführungsformen, mittels welcher Stoffe, zum Beispiel Stäube, die sich in der Abluft befinden, herausgefiltert werden, mit wenigstens einer ersten, mit einer Waschflüssigkeit aus einem Waschflüssigkeitskreislauf beaufschlagbaren Filterelement.

Die Erfindung löst die ihr zugrundeliegende Aufgabe bei einer solchen Abluftreinigungseinrichtung, indem die Abluftreinigungseinrichtung einen ersten Raum sowie einen von dem ersten Raum getrennten zweiten Raum aufweist, wobei die erste Filterwand in dem ersten Raum angeordnet ist, sich eine Waschflüssigkeitsleitung von dem ersten Filterelement in den zweiten hinein Raum erstreckt, fluiddicht gegen den zweiten Raum verschlossen ist, und in einen fluiddicht gegen den zweiten Raum verschließbaren Waschflüssigkeitsbehälter mündet, innerhalb dessen eine Pumpe zum Umfördern der Waschflüssigkeit in dem Waschflüssigkeitskreislauf angeordnet ist. Die erfindungsgemäße Abluftreinigungseinrichtung weist vorzugsweise dieselben bevorzugten Ausführungsformen auf wie die vorstehend beschriebene erfindungsgemäße Stalleinrichtung. Auf die vorstehenden Ausführungen wird diesbezüglich Bezug genommen.

Die Erfindung ist nachfolgend anhand eines bevorzugten Ausführungsbeispiels und unter Bezugnahme auf die beiliegenden Figuren erläutert. Hierbei zeigen:
- Figur 1: eine schematische Skizze einer Stalleinrichtung gemäß der vorliegenden Erfindung,
- Figur 2, 2a, 2b: eine schematische Darstellung einer Abluftreinigungseinrichtung gemäß der vorgehenden Erfindung und
- Figuren 3a, 3b: weitere schematische Darstellungen der Abluftreinigungseinrichtung.

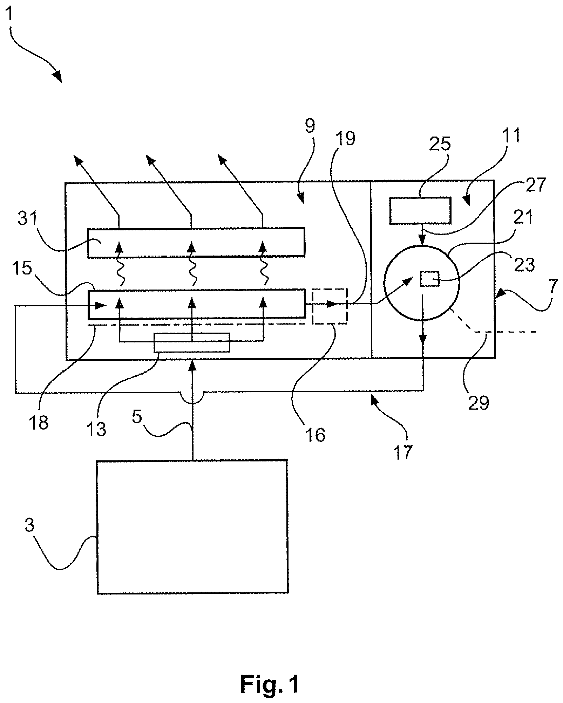

Figur 1 zeigt eine Stalleinrichtung 1 gemäß einem bevorzugten Ausführungsbeispiel der Erfindung. Die Stalleinrichtung 1 weist eine Stallung 3 auf. Die Stallung 3 ist mittels einer Entlüftungsleitung 5 mit einer Abluftreinigungseinrichtung 7 verbunden.

Die Abluftreinigungseinrichtung 7 weist einen ersten Raum 9 und einen zweiten Raum 11. Der zweite Raum 11 ist von dem ersten Raum 9 getrennt und vorzugsweise fluidinsbesondere gasdicht verschließbar.

In dem ersten Raum 9 ist eine Verteilereinrichtung 13 angeordnet, welche mit der Entlüftungsleitung 5 verbunden ist und mehrere Strömungsauslässe aufweist, aus welchen mittels der Entlüftungsleitung zugeführte Luft innerhalb des ersten Raums 9 verteilt wird.

Vorzugsweise wird die zugeführte Luft in dem ersten Raum 9 gleichmäßig auf zumindest eine Oberfläche eines ersten Filterelements 15 verteilt. Das erste Filterelement 15 ist vorzugsweise als Filterwand ausgebildet.

Zur Optimierung der Luftverteilung sowie zur Staub-Vorabscheidung wird vorzugsweise eine Lochfolie 18 zwischen der ersten Filterwand und den Ventilatoren 14 der Verteilereinrichtung 13, insbesondere vor dem ersten Filterelement 15 und nach der Ventiliereinrichtung 13 vorgesehen. Die Lochfolie wird vorzugsweise im Wesentlichen senkrecht zum Boden aufgespannt. Das erste Filterelement 15 ist an einem Waschflüssigkeitskreislauf 17 angeschlossen und wird von diesem mit Waschflüssigkeit durchströmt. Vorzugsweise wird die Waschflüssigkeit derart dem Filterelement 15 zugeführt, dass die gesamte Oberfläche zumindest in dem Bereich, in welchen auch die zugeführte Luft auf das Filterelement 15 trifft, gleichmäßig mit Flüssigkeit benetzt ist. Stromabwärts des Filterelements 15 ist mit diesem eine bzw. sind mit diesem mehrere Rohrleitungen 19 verbunden. Vorzugsweise wird die Waschflüssigkeit über Bodenabläufe 35 a, b unterhalb oder vor dem Filterelement 15 in die eine oder mehreren Rohrleitungen 19 a, b eingeleitet. Mittels der einen oder den mehreren Rohrleitungen 19 a, b wird die Waschflüssigkeit in einem geschlossenen Rohrabschnitt in den zweiten Raum 11 eingeführt, wo sie in einen Waschflüssigkeitsbehälter 21 eingeführt wird. Der Waschflüssigkeitsbehälter 21 ist vorzugsweise als Rundbehälter ausgebildet. In dem Waschflüssigkeitsbehälter 21 ist mindestens eine Pumpe 23 angeordnet, welche vorzugsweise als Kreiselpumpe ausgebildet ist. Mittels der Pumpe 23 wird die Waschflüssigkeit in dem Waschflüssigkeitskreislauf 17 zirkuliert. Alternativ zu dem Vorsehen einer einzelnen Pumpe können auch mehrere Pumpen vorgesehen sein, wahlweise zum Erhöhen der Förderkapazität oder zum Vorhalten von Hilfsaggregaten für Wartungs- und Defektsituationen.

In dem Waschkreislauf 17 ist optional stromabwärts von dem ersten Filterelement 15, vorzugsweise ferner stromabwärts von dem einem oder den mehreren Bodenabläufen 35a,b, und stromaufwärts des Waschflüssigkeitsbehälters 21 mindestens ein Bandsieb 16 angeordnet, welches zum Abscheiden von Grobstoffen, beispielsweise Federn, aus der Waschflüssigkeit eingerichtet ist. Das mindestens eine Bandsieb ist optional wie dargestellt in dem ersten Raum 9 oder in dem zweiten Raum 11 angeordnet (aus Gründen der Übersichtlichkeit nicht separat dargestellt).

Zum ansäuern (Absenken des pH-Werts) der Waschflüssigkeit und somit zur verbesserten Aufnahmekapazität von Ammoniak ist in dem zweiten Raum 11 ein Säurebehälter 25 vorgesehen, welcher fluidleitend mittels einer Leitung 27 ist Bei schwefelhaltiger Abluft wird ein Lagebehälter eingesetzt, der den pH-Wert der Waschflüssigkeit erhöht und die eingetragenen Schwefelverbindungen verändert.

Zum Regulieren des Säuregehalts und/oder Laugegehalts der Waschflüssigkeit ist Säure bzw. Lauge in vorbestimmten Mengen in den Waschflüssigkeitsbehälter 21 einführbar.

An den Waschflüssigkeitsbehälter 21 ist ferner optional eine Rohrleitung 29 zum Ablassen von abgelagertem Schlamm aus dem Waschflüssigkeitsbehälter 21 angeschlossen. Diese Leitung 29 ist mit einem Aufnahmetank, vorzugsweise Gülletank bzw. Schlammtank koppelbar.

Innerhalb des ersten Raumes 9 wird das auf das erste Filterelement 15 treffende Gemisch aus Luft, Staub, Hautabrieb, Ammoniak und ggf. weiteren Belastungen mit der Waschflüssigkeit in Verbindung gebracht und einer ersten Reinigungsstufe unterzogen. Vorzugsweise werden in dem ersten Filterelement 15, welches aus Kunstoffenblöcken bestehen kann, ein Großteil der Feststoffbelastung der Luft (Staub, Hautabrieb, etc.) sowie eine möglichst große Menge an Ammoniak abgeschieden. Vorzugsweise weist das erste Filterelement 15 einen Füllkörper auf, der vorzugsweise aus Kunststoff ausgebildet ist.

Vorzugsweise ist das Filterelement relativ zu den Zuführmitteln der Luft derart ausgerichtet, dass eine Umlenkung des Luftstroms über der abfließenden Wasseroberfläche an der Wand des Filterelements stattfindet. An der Oberfläche des Filterelements siedeln sich, insbesondere bei biologischen Reinigungssystemen und entsprechendem Waschflüssigkeitsmilieu, Mikroorganismen an, welche die stickstoffhaltigen Abluftinhaltsstoffe als Energie- bzw. Nahrungsquelle nutzen und hierdurch ein biologischen Ammoniakabbau durchführen. Vorzugsweise wird mittels geeigneter Messmittel an dem Filterelement und/in der Waschflüssigkeit regelmäßig eine pH Wert-Bestimmung und Leitfähigkeitsmessungen durchgeführt. Vorzugsweise wird der pH Wert mittels Säurezufuhr bzw. Wasserzufuhr in einem Bereich zwischen 6,5 und 6,8 gehalten. Hierfür werden geeignete Regelungsmittel eingesetzt.

Vorzugsweise sind Mittel zur Befeuchtung des ersten Filterelements derart ausgebildet, dass sie nur einen vorderen, der Luftzuführung zugewandten Bereich, beispielsweise im Bereich von 10 bis 15 cm des Filterelements befeuchten, wobei insbesondere ein hinterer Bereich des Filterelements, vorzugsweise 25 bis 30 cm des Filterelements unbefeuchtet bleiben. Zusätzlich kann vorzugsweise auch ein Tropfenabscheider nach dem ersten Filterelement eingesetzt werden. Der Vorteil, der sich hieraus ergibt, ist, dass über den hinteren Bereich zum Beispiel stickstoffhaltige Aerosole abgeschieden werden können. In einer optionalen Ausgestaltung weist die Abluftreinigungseinrichtung einen oder mehrere Tropfenabscheider zwischen dem ersten und zweiten Filterelement auf. Hierdurch wird vermieden, dass diese in ein zweites Filterelement 31 eingetragen werden. Ein Vorteil der Tropfenabscheider wird darin gesehen, dass sie eine Reduktion der Filterwandstärke ermöglichen.

Das zweite Filterelement 31 ist zu dem ersten Filterelement 15 beabstandet in dem ersten Raum 9 angeordnet.

Das zweite Filterelement 31 ist vorzugsweise ein Biofilterelement, welches auch als Filterwand ausgestattet sein kann. Das zweite Filterelement ist vorzugsweise dazu eingerichtet, die Restimmissionen, insbesondere Geruchsstoffe, aus der vorgereinigten Luft zu reduzieren und vorzugsweise mittels mikrobiologischen Stoffwechsels abzubauen. Vorzugsweise weist das zweite Filterelement eine Füllung mit Wurzelholz in verschiedenen Absiebungen (bevorzugt 100 bis 200 mm) auf.

Vorzugsweise ist das zweite Filterelement 31 ferner mittels einer Frischwasserzufuhr befeuchtbar, um eine Austrocknung des Filterelementes 31 zu verhindern. Die Befeuchtung kann mittels bekannter Befeuchtungsanlagen, beispielweise mittels mehrerer Rohrleitungen und computergesteuert durch den Anlagenbetreiber gewährleistet werden.

Die verbrauchte Frischwassermenge ist von der Überwachungseinrichtung in einem Betriebstagebuch registrierbar.

Nach der zweiten Reinigungsstufe durch das Filterelement 31 kann die abgereinigte Luft an die Umgebung aus der Abluftreinigungseinrichtung 7 heraus abgegeben werden.

Zusätzlich kann eine weitere Kunststofffilterwand mit chemischer Wäsche dazwischen geschaltet werden, wenn die Konzentration von Schadstoffen in der Abluft sehr hoch ist oder eine weitere Kunststofffilterwand mit Frischwasserwäsche zur Neutralisation dazwischengeschaltet werden.

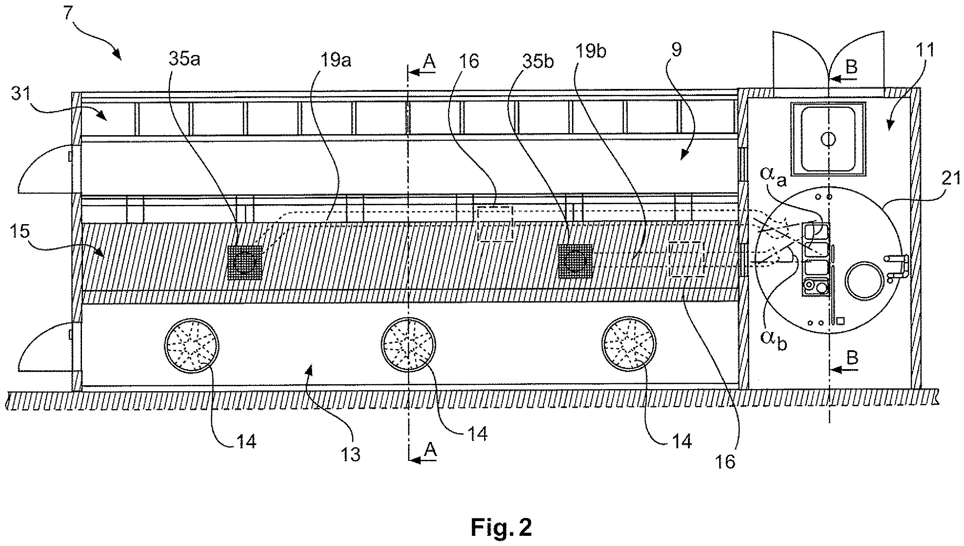

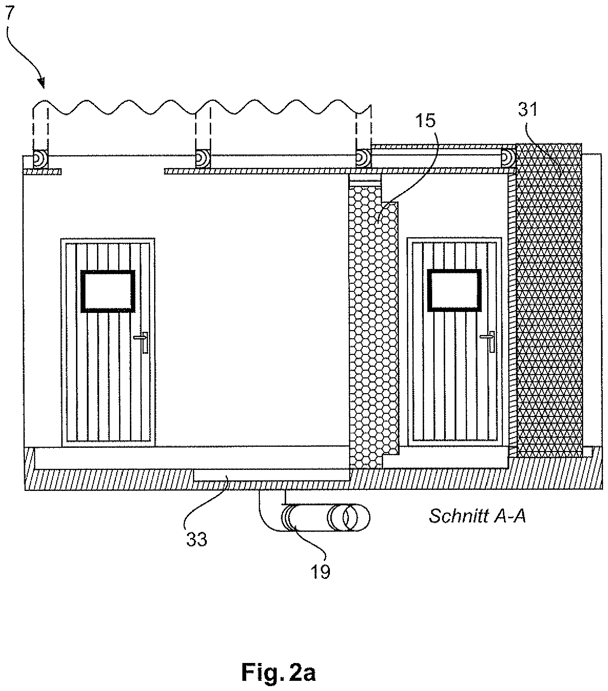

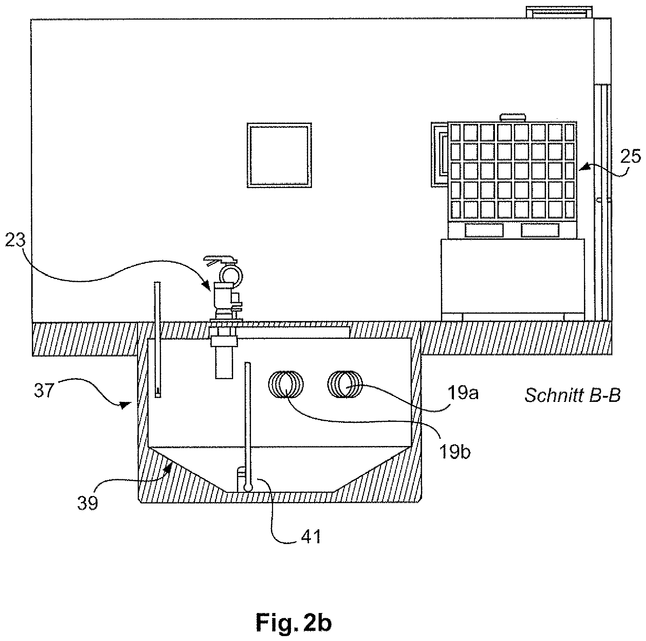

Figuren 2, 2a, 2b zeigen weitere Details zu der Ablaufreinigungsanlage 7, die schematisch auch in Figur 1 bereits abgebildet ist. Identische oder funktional gleiche Elemente tragen dieselben Bezugszeichen. Die Verteiler-Einrichtung 13 weist gemäß Figur 2 mehrere Ventilatoren 14 auf, die zur Verteilung der zugeführten Ablauft aus der Stallung 3 (Figur 1) eingerichtet sind. Unmittelbar eingrenzend an die Verteiler-Einrichtung 13 ist das erste Filterelement 15 in Form einer Filterwand angeordnet. In der Ausführung gemäß Figur 2 sind zwei Rohrleitungen zum Ablauf abgebildet, nämlich Rohrleitung 19a und Rohrleitung 19b. Die Waschflüssigkeit rieselt durch das erste Filterelement hindurch nach unten, und wird in einer Ablaufrinne 33 (Figur 2a) gesammelt. Von der Ablaufrinne 33 wird die Waschflüssigkeit über zwei Bodenabläufe 35a, 35b in die Rohrleitungen 19a, 19b eingeleitet.

Von den Rohrleitungen 19a, 19b aus wird die Waschflüssigkeit in den zweiten Raum 11 befördert. In Figur 2 rechts ist noch der zweite Raum 11 in einer Draufsicht von oben dargestellt. Der als Rundbehälter ausgebildete Waschflüssigkeitsbehälter 21 ist dort im Zusammenspiel mit den Einläufen der Rohrleitungen 19a, 19b abgebildet, Die Rohrleitungen 19a, 19b laufen jeweils in einem Winkel αₐ, *α*_{b} in den Waschflüssigkeitsbehälter 21 ein, welcher größer als 0° bezogen auf einer Radiallinie von dem Punkt des Einlaufes bis zum Mittelpunkt eines zylindrischen Abschnitts 37 ausgerichtet ist (Figur 2b).

Aus Figur 2b ist ferner auch zu erkennen, dass der Waschflüssigkeitsbehälter 21, welcher in einem Fundament bodenseitig eingelassen ist, neben dem zylindrischen Abschnitt 37, in welchen die Einläufe der Rohrleitungen 19a, 19b münden, einen konisch verjüngt ausgebildeten Abschnitt 39 aufweist. In diesem konisch verjüngt ausgebildeten Abschnitt 39 setzen sich Feststoffe und Schlämme ab, die von einer entsprechend eingerichteten Absaugpumpe 41 bei Erreichen eines vorbestimmten Mindeststandes, bestimmbar beispielsweise über die Leitfähigkeit, abgesaugt werden können.

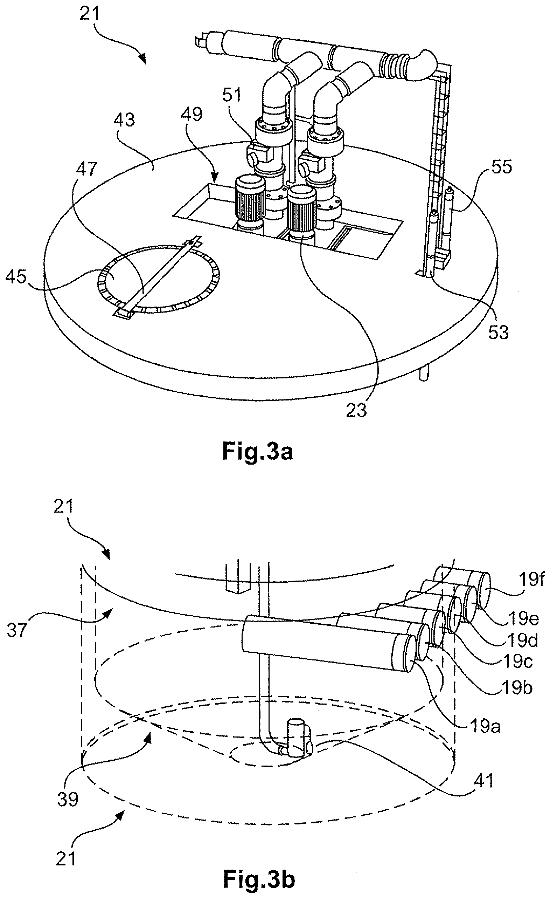

Details zu dem Waschflüssigkeitsbehälter sind auch in den Figuren 3a und 3b gezeigt.

Figur 3 zeigt eine räumliche schematische Darstellung eines Deckels des Waschflüssigkeitsbehälters 21. Der Deckel 43 weist ein Mannloch 45 auf, welches mit einem Sperrbügel 47 verriegelbar ist. Figur 4a zeigt den verriegelten Zustand. Neben dem Mannloch 45 ist eine weitere Ausnehmung 49 in dem Behälterdeckel 43 vorgesehen. In die Ausnehmung 49 hinein erstrecken sich zwei Pumpen 23, die als Kreiselpumpen ausgebildet sind. Beide Kreiselpumpen 23 weisen einen Rücklaufschutz 51 auf.

Ferner sind an den Behälterdeckel 43 Messmittel zur Überwachung der Betriebsgrößen innerhalb des Waschflüssigkeitsbehälters 21 angeordnet, welche mit einer Überwachungseinrichtung verbindbar sind. Dies sind zum einen ein Messfühler 53 für die elektrische Leitfähigkeit und Temperatur sowie zum anderen ein Messfühler 55 für den pH Wert der Waschflüssigkeit.

Figur 3 zeigt eine semitransparente schematische Räumliche Darstellung des Waschflüssigkeitsbehälters 21 in seiner Ausbildung als Rundbehälter. Dort sind andeutungsweise eine Mehrzahl jeweils angewinkelt bezogen einer Radialrichtung einlaufende Rohrelemente abgebildet, referenziert mit den Bezugszeichen 19a-f. Die Rohrelemente 19a-f laufen in den zylindrischen Abschnitt 37 des Waschflüssigkeitsbehälters 21 ein. Unterhalb des zylindrischen Abschnitts 37 in dem konisch verjüngten Abschnitt 39 ist die Pumpe zum Absaugen und des sedimentierten Schlamms sogenannte Abschlämmpumpe 41 angeordnet.

## Patentansprüche

1. Stalleinrichtung (1) für Nutztiere, mit einem Raum, in dem sich Tiere, die in dem Stall gehalten werden, aufhalten sowie einer Entlüftung (5), mittels der Luft aus dem Stallraum (3) abgeführt wird, sowie einer Abluftreinigungseinrichtung (7), mittels der Stoffe, zum Beispiel Stäube und Gase, die sich in der Abluft befinden, herausgefiltert werden, mit wenigstens einem ersten, mit einer Waschflüssigkeit aus einem Waschflüssigkeitskreislauf (17) beaufschlagbaren Filterelement, wobei
- die Abluftreinigungseinrichtung (7) mindestens einen ersten Raum (9) sowie einen von dem ersten Raum (9) getrennten zweiten Raum (11) aufweist, wobei das erste Filterelement in dem ersten Raum (9) angeordnet ist,
- sich eine Waschflüssigkeitsleitung (19; 19a, b) von dem ersten Filterelement (15) in den zweiten Raum (11) hinein erstreckt, fluiddicht gegen den zweiten Raum (11) verschlossen ist, und in einen fluiddicht gegen den zweiten Raum (11) verschließbaren Waschflüssigkeitsbehälter (21) mündet, dem eine Pumpe (23) zum Umfördern der Waschflüssigkeit in dem Waschflüssigkeitskreislauf (17) zugeordnet ist, **dadurch gekennzeichnet,**
**dass** im Waschflüssigkeitskreislauf (17) stromabwärts von dem ersten Filterelement (15), und stromaufwärts des Waschflüssigkeitsbehälters (21) ein Bandsieb angeordnet ist, welches zum Abscheiden von Grobstoffen, beispielsweise Federn, aus der Waschflüssigkeit eingerichtet ist, wobei vorzugsweise das Bandsieb als Förderband ausgebildet ist, und dazu eingerichtet ist, im Anlagenbetrieb angetrieben zu werden,
wobei die Stalleinrichtung ein zweites Filterelement aufweist, welches zu dem ersten Filterelement beabstandet in dem ersten Raum angeordnet ist und mittels einer Frischwasserzufuhr befeuchtbar ist, um eine Austrocknung des zweiten Filterelements (31) zu verhindern.

2. Stalleinrichtung nach Anspruch 1,
**dadurch gekennzeichnet, dass** der Waschflüssigkeitsbehälter ein Rundbehälter mit einem zylindrischen Wandabschnitt ist, und die Waschflüssigkeitsleitung einen behälterseitigen Einlauf aufweist, welcher in einem Winkel von größer als 0° zu einer Radiallinie des zylindrischen Abschnitts ausgerichtet ist.

3. Stalleinrichtung nach einem der vorstehenden Ansprüche,
**dadurch gekennzeichnet, dass** in einem Bodenbereich des Waschflüssigkeitsbehälter (11) eine Abschlämmpumpe (41) angeordnet ist, welche dazu eingerichtet ist, sich ablagernden Schlamm aus dem Waschflüssigkeitsbehälter abzusaugen, wobei vorzugsweise die Abschlämmpumpe dazu eingerichtet ist, den Schlamm als Funktion eines vorbestimmten, in dem Waschflüssigkeitsbehälter gemessenen Leit-wertes abzupumpen.

4. Stalleinrichtung nach einem der vorstehenden Ansprüche,
**dadurch gekennzeichnet, dass** der Rundbehälter in Richtung seines Bodenbereiches konisch verjüngt ausgebildet ist.

5. Stalleinrichtung nach einem der vorstehenden Ansprüche,
**dadurch gekennzeichnet, dass** unterhalb des ersten Filterelements eine Ablaufrinne (33) angeordnet ist, welche mittels einem oder mehreren Bodenabläufen (35a, b) fluidleitend mit der Waschflüssigkeitsleitung (19a, b) verbunden ist.

6. Stalleinrichtung nach einem der vorstehenden Ansprüche,
**dadurch gekennzeichnet, dass** die Stalleinrichtung über eine Überwachungseinrichtung verfügt, mittels der die Belastung der Abluft überwacht wird, sowie vorzugsweise eine Steuereinrichtung, welche bei Überschreiten eines vorbestimmten Belastungswerts in der Abluft aktiviert wird.

7. Stalleinrichtung nach Anspruch 6,
**dadurch gekennzeichnet, dass** die Abluftreinigungseinrichtung (7) mit der Steuereinrichtung gekoppelt ist und die Abluftreinigungseinrichtung so steuerbar ist, dass sie in einem Zustand von der Abluft durchströmt wird und in wenigstens einem weiteren Zustand von der Abluft nicht durchströmt wird.

8. Stalleinrichtung nach Anspruch 7,
**dadurch gekennzeichnet, dass** dann, wenn in der Abluft ein vorbestimmter Belastungs-wert quantitativ einen vorbestimmten Wert überschreitet, die Steuereinrichtung die Filtereinrichtung derart aktiviert, dass die Abluft die Abluftreinigungseinrichtung durchströmt und somit die Emission in der Abluft am Ausgang der Abluftreinigungseinrichtung geringer sind als am Eingang der Abluftreinigungseinrichtung.

9. Stalleinrichtung nach Anspruch 8,
**gekennzeichnet durch** eine Aufzeichnungseinheit, welche mit der Überwachungseinheit gekoppelt ist und mittels welcher die Belastung der Abluft aufgezeichnet wird.

10. Stalleinrichtung nach einem der Ansprüche 6 bis 9,
**dadurch gekennzeichnet, dass** die Überwachungseinrichtung ausschließlich fernbetreibbar ist.

11. Stalleinrichtung nach Anspruch 10,
**dadurch gekennzeichnet, dass** die Messeinrichtung passwortgeschützt ist und nur nach Eingabe eines Passwortes vorbestimmte, vorzugsweise mit der Messeinrichtung messbare, Schwellwerte einstellbar sind.

12. Stalleinrichtung nach einem der vorherigen Ansprüche,
**dadurch gekennzeichnet, dass** die Betriebszeit der Abluftreinigungseinrichtung ermittelt und aufgezeichnet wird.

13. Stalleinrichtung nach einem der vorherigen Ansprüche,
**gekennzeichnet durch** eine Datenausgabe-Einheit für die gemessenen Daten.

14. Stalleinrichtung nach einem der vorstehenden Ansprüche,
**dadurch gekennzeichnet, dass** eine, mehrere oder sämtliche der Folgenden in dem zweiten Raum (11) angeordnet sind:
- Überwachungseinrichtung,
- Steuereinrichtung,
- Aufzeichnungseinheit,
- Messeinrichtung,
- Datenausgabe-Einheit.

15. Stalleinrichtung nach einem der vorstehenden Ansprüche,
**dadurch gekennzeichnet, dass** der Waschflüssigkeitsbehälter als Erdbehälter ausgebildet, insbesondere im Bodenreich oder einem Fundament im Bodenreich eingelassen ist, oder dadurch, dass der Waschflüssigkeitsbehälter als Aufstellbehälter ausgebildet, insbesondere zum Aufstellen auf einer Oberfläche eingerichtet ist.

16. Abluftreinigungseinrichtung (7) zur Verwendung in einer Stalleinrichtung für Nutztiere, insbesondere nach einem der vorstehenden Ansprüche, mittels der Stoffe, zum Beispiel Stäube, die sich in der Abluft befinden, herausgefiltert werden, mit wenigstens einem ersten, mit einem Waschflüssigkeit aus einem Waschflüssigkeitskreislauf (17) beaufschlagbaren Filterelement, wobei die Abluftreinigungseinrichtung (7) einen ersten Raum (9) sowie einen von dem ersten Raum (9) getrennten zweiten Raum (11) aufweist, wobei das erste Filterelement in dem ersten Raum angeordnet ist,
sich eine Waschflüssigkeitsleitung (19; 19a, b) von dem ersten Filterelement (15), in den zweiten Raum (11) hinein erstreckt, fluiddicht gegen den zweiten Raum (11) verschlossen ist, und in einen fluiddicht gegen den zweiten Raum (11) verschließbaren Waschflüssigkeitsbehälter (21) mündet, dem eine Pumpe (23) zum Umfördern der Waschflüssigkeit in dem Waschflüssigkeitskreislauf (17) zugeordnet ist, **dadurch gekennzeichnet, dass** im Waschflüssigkeitskreislauf (17) stromabwärts von dem ersten Filterelement (15), und stromaufwärts des Waschflüssigkeitsbehälters (21) ein Bandsieb angeordnet ist, welches zum Abscheiden von Grobstoffen, beispielsweise Federn, aus der Waschflüssigkeit eingerichtet ist, wobei vorzugsweise das Bandsieb als Förderband ausgebildet ist, und dazu eingerichtet ist, im Anlagenbetrieb angetrieben zu werden,
wobei die Stalleinrichtung ein zweites Filterelement aufweist, welches zu dem ersten Filterelement beabstandet in dem ersten Raum angeordnet ist und mittels einer Frischwasserzufuhr befeuchtbar ist.

## Claims

1. Barn facility (1) for livestock, having space in which animals that are kept in the barn reside, and a ventilation system (5) by means of which air is discharged from the barn space (3), and a waste air treatment device (7) by means of which substances, for example dust and gases, found in the waste air are filtered out, having at least one first filter element to which a washing liquid from a washing liquid circuit (17) is able to be applied, wherein
- the waste air treatment device (7) has at least one first space (9) and a second space (11) separated from the first space (9), wherein the first filter element is arranged in the first space (9),
- a washing liquid line (19; 19a, b) extends from the first filter element (15) into the second space (11), is closed off in a fluid-tight manner from the second space (11), and leads into a washing liquid container (21) which is able to be closed off in a fluid-tight manner from the second space (11) and to which a pump (23) for pumping the washing liquid through the washing liquid circuit (17) is assigned, **characterized**
**in that** a belt screen is arranged in the washing liquid circuit (17) downstream of the first filter element (15) and upstream of the washing liquid container (21), said belt screen being set up to separate coarse materials, for example feathers, from the washing liquid, wherein preferably the belt screen is in the form of a conveyor belt and is set up to be driven during plant operation,
wherein the barn facility has a second filter element which is arranged in the first space in a manner spaced apart from the first filter element and is able to be wetted by means of a fresh water supply in order to prevent the second filter element (31) from drying out.

2. Barn facility according to Claim 1,
**characterized in that** the washing liquid container is a round container with a cylindrical wall portion, and the washing liquid line has a container-side inlet that is oriented at an angle of greater than 0° to a radial line of the cylindrical portion.

3. Barn facility according to either of the preceding claims,
**characterized in that**, in a bottom region of the washing liquid container (11), a sludge removal pump (41) is arranged, which is set up to suck settling sludge out of the washing liquid container, wherein preferably the sludge removal pump is set up to pump out the sludge depending on a predetermined guide value measured in the washing liquid container.

4. Barn facility according to one of the preceding claims,
**characterized in that** the round container is formed in a manner narrowing conically in the direction of its bottom region.

5. Barn facility according to one of the preceding claims,
**characterized in that**, beneath the first filter element, a drainage channel (33) is arranged, which is connected to the washing liquid line (19a, b) in a fluid-conducting manner by means of one or more bottom drains (35a, b).

6. Barn facility according to one of the preceding claims,
**characterized in that** the barn facility has a monitoring device, by means of which the pollution of the waste air is monitored, and preferably a control device, which is activated when a predetermined pollution value in the waste air is exceeded.

7. Barn facility according to Claim 6,
**characterized in that** the waste air treatment device (7) is coupled to the control device, and the waste air treatment device is controllable such that the waste air flows through it in one state and the waste air does not flow through it in at least one further state.

8. Barn facility according to Claim 7,
**characterized in that**, when a predetermined pollution value quantitatively exceeds a predetermined value in the waste air, the control device activates the filter device such that the waste air flows through the waste air treatment device and thus the emissions in the waste air at the outlet of the waste air treatment device are lower than at the inlet of the waste air treatment device.

9. Barn facility according to Claim 8,
**characterized by** a recording unit which is coupled to the monitoring unit and by means of which the pollution of the waste air is recorded.

10. Barn facility according to one of Claims 6 to 9,
**characterized in that** the monitoring device is exclusively remote-controllable.

11. Barn facility according to Claim 10,
**characterized in that** the measuring device is password protected and predetermined threshold values that are preferably measurable using the measuring device are settable only after input of a password.

12. Barn facility according to one of the preceding claims,
**characterized in that** the operating time of the waste air treatment device is determined and recorded.

13. Barn facility according to one of the preceding claims,
**characterized by** a data output unit for the measured data.

14. Barn facility according to one of the preceding claims,
**characterized in that** one, some or all of the following are arranged in the second space (11):
- monitoring device,
- control device,
- recording unit,
- measuring device,
- data output unit.

15. Barn facility according to one of the preceding claims,
**characterized in that** the washing liquid container is in the form of an underground tank that has been set in particular in the ground or a substructure in the ground, or **in that** the washing liquid container is in the form of a standing tank, in particular for standing on a surface.

16. Waste air treatment device (7) for use in a barn facility for livestock, in particular according to one of the preceding claims, by means of which substances, for example dust, found in the waste air are filtered out, having at least one first filter element to which a washing liquid from a washing liquid circuit (17) is able to be applied,
wherein the waste air treatment device (7) has a first space (9) and a second space (11) separated from the first space (9), wherein the first filter element is arranged in the first space,
a washing liquid line (19; 19a, b) extends from the first filter element (15) into the second space (11), is closed off in a fluid-tight manner from the second space (11), and leads into a washing liquid container (21) which is able to be closed off in a fluid-tight manner from the second space (11) and to which a pump (23) for pumping the washing liquid through the washing liquid circuit (17) is assigned, **characterized**
**in that** a belt screen is arranged in the washing liquid circuit (17) downstream of the first filter element (15) and upstream of the washing liquid container (21), said belt screen being set up to separate coarse materials, for example feathers, from the washing liquid, wherein preferably the belt screen is in the form of a conveyor belt and is set up to be driven during plant operation,
wherein the barn facility has a second filter element which is arranged in the first space in a manner spaced apart from the first filter element and is able to be wetted by means of a fresh water supply.

## Revendications

1. Bâtiment d'élevage (1) pour des animaux d'élevage, avec un espace dans lequel des animaux qui sont maintenus dans l'étable, séjournent ainsi qu'une ventilation (5) au moyen de laquelle de l'air est évacué de l'espace d'étable (3), ainsi qu'un dispositif de traitement des effluents gazeux (7) au moyen duquel des substances, par exemple des poussières et des gaz qui se trouvent dans les effluents gazeux, sont filtrées, avec au moins un premier élément de filtre pouvant être alimenté en un liquide de lavage provenant d'un circuit de liquide de lavage (17),
dans lequel
- le dispositif de traitement des effluents gazeux (7) présente au moins un premier espace (9) ainsi qu'un second espace (11) séparé du premier espace (9), dans lequel le premier élément de filtre est agencé dans le premier espace (9),
- une conduite de liquide de lavage (19 ; 19a, b) s'étend du premier élément de filtre (15) dans le second espace (11), est fermée de manière étanche au fluide contre le second espace (11), et débouche dans un récipient de liquide de lavage (21) refermable de manière étanche au fluide contre le second espace (11), auquel une pompe (23) est associée pour le refoulement du liquide de lavage dans le circuit de liquide de lavage (17), **caractérisé en ce**
**qu'**un tamis à bande est agencé dans le circuit de liquide de lavage (17) en aval du premier élément de filtre (15) et en amont du récipient de liquide de lavage (21), lequel est aménagé pour la séparation de substances grossières, par exemple de plumes, du liquide de lavage, dans lequel de préférence le tamis à bande est réalisé comme bande de transport, et est aménagé afin d'être entraîné en fonctionnement de l'installation,
dans lequel le bâtiment d'élevage présente un second élément de filtre qui est agencé à distance du premier élément de filtre dans le premier espace et peut être humidifié au moyen d'une amenée d'eau douce afin d'empêcher un assèchement du second élément de filtre (31).

2. Bâtiment d'élevage selon la revendication 1,
**caractérisé en ce que** le récipient de liquide de lavage est un récipient rond avec une section de paroi cylindrique, et la conduite de liquide de lavage présente une entrée côté récipient qui est orientée dans un angle supérieur à 0° par rapport à une ligne radiale de la section cylindrique.

3. Bâtiment d'élevage selon l'une quelconque des revendications précédentes,
**caractérisé en ce qu'**une pompe de purge (41) est agencée dans une zone de fond du récipient de liquide de lavage (11), laquelle est aménagée afin d'aspirer des boues se déposant du récipient de liquide de lavage, dans lequel de préférence la pompe de purge est aménagée afin de pomper les boues en fonction d'une valeur guide prédéterminée mesurée dans le récipient de liquide de lavage.

4. Bâtiment d'élevage selon l'une quelconque des revendications précédentes,
**caractérisé en ce que** le récipient rond est réalisé de manière rétrécie en cône en direction de sa zone de fond.

5. Bâtiment d'élevage selon l'une quelconque des revendications précédentes,
**caractérisé en ce qu'**une rigole d'écoulement (33) est agencée en dessous du premier élément de filtre, laquelle est raccordée par acheminement de fluide à la conduite de liquide de lavage (19a, b) au moyen des une ou plusieurs évacuations de fond (35a, b).

6. Bâtiment d'élevage selon l'une quelconque des revendications précédentes,
**caractérisé en ce que** le bâtiment d'élevage dispose d'un dispositif de surveillance au moyen duquel la charge des effluents gazeux est surveillée, ainsi que de préférence un dispositif de commande qui est activé en cas de dépassement d'une valeur de charge prédéterminée dans les effluents gazeux.

7. Bâtiment d'élevage selon la revendication 6,
**caractérisé en ce que** le dispositif de traitement des effluents gazeux (7) est accouplé au dispositif de commande et le dispositif de traitement des effluents gazeux peut être commandé de sorte qu'il soit traversé dans un état par les effluents gazeux et ne soit pas traversé dans au moins un autre état par les effluents gazeux.

8. Bâtiment d'élevage selon la revendication 7,
**caractérisé en ce que** lorsqu'une valeur de charge prédéterminée dépasse dans les effluents gazeux quantitativement une valeur prédéterminée, le dispositif de commande active le dispositif de filtre de telle manière que les effluents gazeux traversent le dispositif de traitement des effluents gazeux et ainsi l'émission dans les effluents gazeux est plus faible à la sortie du dispositif de traitement des effluents gazeux qu'à l'entrée du dispositif de traitement des effluents gazeux.

9. Bâtiment d'élevage selon la revendication 8,
**caractérisé par** une unité d'enregistrement qui est accouplée à l'unité de surveillance et au moyen de laquelle la charge des effluents gazeux est enregistrée.

10. Bâtiment d'élevage selon l'une quelconque des revendications 6 à 9,
**caractérisé en ce que** le dispositif de surveillance peut être exploité à distance exclusivement.

11. Bâtiment d'élevage selon la revendication 10,
**caractérisé en ce que** le dispositif de mesure est protégé par mot de passe et des valeurs seuil prédéterminées, mesurables de préférence avec le dispositif de mesure sont réglables seulement après la saisie d'un mot de passe.

12. Bâtiment d'élevage selon l'une quelconque des revendications précédentes,
**caractérisé en ce que** le temps de fonctionnement du dispositif de traitement des effluents gazeux est déterminé et enregistré.

13. Bâtiment d'élevage selon l'une quelconque des revendications précédentes,
**caractérisé par** une unité d'émission de données pour les données mesurées.

14. Bâtiment d'élevage selon l'une quelconque des revendications précédentes,
**caractérisé en ce qu'**un, plusieurs ou l'ensemble de ce qui suit sont agencés dans le second espace (11):
- dispositif de surveillance,
- dispositif de commande,
- unité d'enregistrement,
- dispositif de mesure,
- unité d'émission de données.

15. Bâtiment d'élevage selon l'une quelconque des revendications précédentes,
**caractérisé en ce que** le récipient de liquide de lavage est réalisé comme un récipient de terre, en particulier est encastré dans le sol ou dans une fondation dans le sol, ou **en ce que** le récipient de liquide de lavage est réalisé comme récipient de montage, en particulier est aménagé pour le montage sur une surface.

16. Dispositif de traitement des effluents gazeux (7) pour l'utilisation dans un bâtiment d'élevage pour des animaux d'élevage, en particulier selon l'une quelconque des revendications précédentes, au moyen duquel des substances, par exemple des poussières qui se trouvent dans les effluents gazeux, sont filtrées, avec au moins un premier élément de filtre pouvant être alimenté en un liquide de lavage provenant d'un circuit de liquide de lavage (17),
dans lequel le dispositif de traitement des effluents gazeux (7) présente un premier espace (9) ainsi qu'un second espace (11) séparé du premier espace (9), dans lequel le premier élément de filtre est agencé dans le premier espace,
une conduite de liquide de lavage (19; 19a, b) est fermée par le premier élément de filtre (15) dans le second espace (11), de manière étanche au fluide contre le second espace (11), et débouche dans un récipient de liquide de lavage (21) refermable de manière étanche au fluide contre le second espace (11), auquel une pompe (23) est associée pour le refoulement du liquide de lavage dans le circuit de liquide de lavage (17), **caractérisé en ce**
**qu'**un tamis à bande est agencé dans le circuit de liquide de lavage (17) en aval du premier élément de filtre (15) et en amont du récipient de liquide de lavage (21), qui est aménagé pour la séparation de substances grossières, par exemple de plumes, du liquide de lavage, dans lequel de préférence le tamis à bande est réalisé comme une bande transporteuse, et est aménagé afin d'être entraîné dans le mode d'installation,
dans lequel le bâtiment d'élevage présente un second élément de filtre qui est agencé à distance du premier élément de filtre dans le premier espace et peut être humidifié au moyen d'une amenée d'eau douce.
